# EUROPÄISCHE PATENTSCHRIFT

(11) **EP 2 758 841 B1**
(45) Veröffentlichungstag und Bekanntmachung des Hinweises auf die Patenterteilung: **17.02.2021**
(21) Anmeldenummer: 12740375.6
(22) Anmeldetag: 30.07.2012
(51) Int. Cl.: G05D 1/02, A01D 34/00

(54) **AUTONOMES ARBEITSGERÄT**
AUTONOMOUS WORKING DEVICE
APPAREIL DE TRAVAIL AUTONOME

(30) Priorität: 23.09.2011 DE 102011083309
(43) Veröffentlichungstag der Anmeldung: 30.07.2014
(73) Patentinhaber: Robert Bosch GmbH, 70442 Stuttgart (DE)
(72) Erfinder: BIBER, Peter, 72119 Poltringen (DE); PETEREIT, Steffen, 71691 Freiberg A. N. (DE); KOCH, Christoph, 70178 Stuttgart (DE); ALBERT, Amos, 71229 Leonberg (DE)
(86) Internationale Anmeldenummer: PCT/EP2012/064877
(87) Internationale Veröffentlichungsnummer: WO 2013/041278

(56) Entgegenhaltungen:
- EP-A1- 1 557 730
- US-A1- 2011 125 324
- ACAR E U ET AL: "Morse Decompositions for Coverage Tasks", INTERNATIONAL JOURNAL OF ROBOTICS RESEARCH, SAGE SCIENCE PRESS, THOUSAND OAKS, US, Bd. 21, Nr. 4, 1. April 2002 (2002-04-01), Seiten 331-344, XP002672247, ISSN: 0278-3649

## Beschreibung

### Stand der Technik

Es ist bereits ein Verfahren mit einem autonomen Arbeitsgerät, nach dem Oberbegriff des Anspruchs 1 bekannt, beispielsweise aus der EP 1 557 730 A1.

### Offenbarung der Erfindung

Die Erfindung betrifft einen Verfahren mit einem autonomen Arbeitsgerät, insbesondere einem autonomen Rasenmäher, nach Anspruch 1.

Es wird vorgeschlagen, dass das autonome Arbeitsgerät in einem Schritt eines regulären Betriebs von einem Startpunkt aus einem Erfassungselement über eine variable Distanz hinweg folgt und sich anschließend um einen variablen Winkel in Richtung der zu bearbeitenden Fläche dreht wobei die variable Distanz sowie der variable Winkel über eine Recheneinheit zufällig generiert werden und die variable Distanz zwischen null und einer Länge des Erfassungselements liegt. Die Recheneinheit ist dazu vorgesehen, die zu bearbeitende Fläche in zumindest zwei abzufahrende dynamische Teilflächen aufzuteilen, welche separat abzufahren sind. Unter einem "autonomen Arbeitsgerät" soll in diesem Zusammenhang insbesondere ein Gerät verstanden werden, welches eine Arbeit zumindest teilweise selbsttätig verrichtet, wie insbesondere selbsttätig beginnt, selbsttätig beendet und/oder selbsttätig zumindest einen Parameter, wie insbesondere einen Streckenparameter, und/oder einen Umkehrpunkt usw. auswählt. Besonders bevorzugt ist das Gerät dazu vorgesehen, eine Fläche abzufahren und insbesondere die Fläche zu bearbeiten, wie beispielsweise zu kehren, abzusaugen, zu reinigen und/oder einen auf der Fläche befindlichen Rasen zu mähen. Dabei sind verschiedene, dem Fachmann als sinnvoll erscheinende autonome Arbeitsgeräte denkbar, wie beispielsweise eine autonome Kehrmaschine, ein autonomer Staubsauger oder eine autonome Schwimmbadreinigungsmaschine usw. Insbesondere ist das autonome Arbeitsgerät jedoch von einem autonomen Rasenmäher gebildet. Ferner soll unter einer "Recheneinheit" insbesondere eine Einheit mit einem Informationseingang, einer Informationsverarbeitung und/oder einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Die Recheneinheit ist vorzugsweise innerhalb eines Teils des autonomen Arbeitsgeräts angeordnet, das zur Verrichtung einer Arbeit angetrieben über die zu bearbeitende Fläche bewegt wird. Alternativ und/oder zusätzlich könnte jedoch auch die Recheneinheit außerhalb des Teils des autonomen Arbeitsgeräts angeordnet sein, wie beispielsweise in einer Fernbedienung und/oder einer stationären Station. Eine Verbindung zwischen dem Teil und der Recheneinheit des autonomen Arbeitsgeräts kann insbesondere über eine drahtlose Verbindung erfolgen. Dadurch kann insbesondere die Recheneinheit des autonomen Arbeitsgeräts aus dem Teil des autonomen Arbeitsgeräts ausgelagert werden, um eine Belastung durch Schmutz gering zu halten. Ferner kann dadurch ein Gewicht des Teils des autonomen Arbeitsgeräts gering gehalten werden. Unter einer "zu bearbeitenden Fläche" soll in diesem Zusammenhang insbesondere eine Fläche verstanden werden, welche einen Arbeitsbereich definiert. Unter einer "dynamischen Teilfläche" soll in diesem Zusammenhang insbesondere eine Teilfläche verstanden werden, die zumindest nach einem Zeitintervall und/oder bei jedem neuen Arbeitsvorgang zumindest im Wesentlichen neu generiert und/oder neu erfasst wird. Dabei soll unter "zumindest im Wesentlichen neu" insbesondere eine Änderung um zumindest 5%, vorzugsweise eine Änderung um zumindest 10% und besonders bevorzugt eine Änderung um zumindest 20%. Dabei soll in diesem Zusammenhang unter einer "Teilfläche" insbesondere eine Fläche verstanden werden, die zumindest einen Teilbereich einer zu bearbeitenden Fläche bildet, vorzugsweise im Wesentlichen kleiner als 100% der gesamten zu bearbeitenden Fläche. Dabei soll unter "im Wesentlichen kleiner" insbesondere um zumindest 5% kleiner, vorzugweise um zumindest 10% kleiner und besonders bevorzugt um zumindest 20% kleiner verstanden werden. Ferner soll in diesem Zusammenhang unter einem "separaten Abfahren" insbesondere verstanden werden, dass ein Abfahren einer Teilfläche zumindest zum Großteil der Fläche zeitlich getrennt von einem Abfahren einer differierenden Teilfläche abläuft. Dabei soll unter "zumindest zum Großteil einer Fläche" in diesem Zusammenhang insbesondere zumindest 20%, vorzugsweise zumindest 40%, besonders bevorzugt zumindest 60% einer Fläche verstanden werden.

Durch die erfindungsgemäße Ausgestaltung des autonomen Arbeitsgeräts kann vorteilhaft ein besonders effizientes Abfahren der zu bearbeitenden Fläche bereitgestellt werden, bei der ein hoher Verschleiß und/oder eine hohe Beanspruchung der zu bearbeitenden Fläche vermieden werden kann. Ferner kann dadurch eine Arbeitszeit gering gehalten werden.

Ferner wird vorgeschlagen, dass die Recheneinheit bei einem fehlgeschlagenen Manöver dazu vorgesehen ist, die bisher abgefahrene Fläche als abgefahrene Teilfläche zu vermerken und eine neue abzufahrende Teilfläche zu bestimmen. Unter einem "fehlgeschlagenen Manöver" soll in diesem Zusammenhang insbesondere ein Arbeitsschritt verstanden werden, der eine zumindest wesentliche Abweichung von einem geplanten und/oder vorgesehenen Arbeitsschritt, insbesondere durch äußere, für das autonome Arbeitsgerät unvorhersehbare Einflüsse bedingt, aufweist. Dabei soll unter einer "zumindest wesentlichen Abweichung" insbesondere eine Abweichung eines IstWerts von einem Soll-Wert um mehr als 2%, vorzugsweise um mehr als 5% und besonders bevorzugt um mehr als 10% verstanden werden. Es sind verschiedene, dem Fachmann als sinnvoll erscheinende Arbeitsschritte denkbar, besonders bevorzugt soll darunter jedoch eine Fahrtrichtungsänderung um wenigstens 10° verstanden werden. Dadurch kann vorteilhaft verhindert werden, dass sich ein fehlgeschlagenes Manöver auf eine nachfolgende Genauigkeit des Abfahrens der abzufahrenden Fläche auswirkt.

Des Weiteren wird vorgeschlagen, dass die Recheneinheit dazu vorgesehen ist, zumindest den zwei dynamischen Teilflächen zumindest teilweise abhängig von zumindest einem spezifischen Merkmal ihrer Form jeweils zumindest eine Abfahrstrategie zuzuweisen. Unter einem "spezifischen Merkmal einer Fläche" soll in diesem Zusammenhang insbesondere ein Merkmal verstanden werden, das eine Fläche zumindest teilweise definiert und/oder charakterisiert. Das Merkmal kann von einem Verhältnis und/oder von einem konkreten Wert gebildet sein. Besonders bevorzugt ist das Merkmal von einem Verhältnis einer Breite zu einer Länge der Fläche und/oder von einer Größe der Fläche und/oder von einer Konvexität der Fläche gebildet. Es sind verschiedene, dem Fachmann als sinnvoll erscheinende Abfahrstrategien denkbar, wie insbesondere eine Mäanderstrategie, eine Spiralstrategie oder eine Zufallsstrategie. Dabei soll unter einer "Mäanderstrategie" insbesondere eine Abfahrstrategie verstanden werden, bei der eine Fläche in parallel zueinander verlaufenden Bahnen abgefahren wird. Das Ende einer Bahn ist jeweils mit dem Anfang der nächsten, benachbarten Bahn verbunden. Benachbarte Bahnen weisen dabei entgegengesetzte Fahrtrichtungen auf.

Ferner soll in diesem Zusammenhang unter einer "Spiralstrategie" insbesondere eine Abfahrstrategie verstanden werden, bei der eine Fläche spiralförmig abgefahren wird. Die Spirale kann sowohl von außen nach innen, als auch von innen nach außen gefahren werden. Vorzugsweise wird die Spirale insbesondere von außen nach innen gefahren. Des Weiteren soll in diesem Zusammenhang unter einer "Zufallsstrategie" insbesondere eine Abfahrstrategie verstanden werden, bei der eine Fläche dahingehend abgefahren wird, dass das autonome Arbeitsgerät geradeaus, willkürlich über die Fläche fährt. Wird eine Außenkante der Fläche erreicht, wendet das autonome Arbeitsgerät um einen willkürlichen Winkel. Dieser Vorgang wird so oft wiederholt, bis die Fläche zumindest annähernd abgefahren ist. Dabei soll unter "zumindest annähernd" insbesondere zumindest 70%, vorzugsweise zumindest 80%, besonders bevorzugt zumindest 90% verstanden werden. Dadurch kann vorteilhaft ein effizientes und angepasstes Abfahren realisiert werden.

Es wird ferner vorgeschlagen, dass das autonome Arbeitsgerät eine Erfassungseinheit aufweist, welche dazu vorgesehen ist, zumindest ein die zu bearbeitende Fläche zumindest teilweise begrenzendes Erfassungselement zu detektieren. Unter einer "Erfassungseinheit" soll in diesem Zusammenhang insbesondere eine Einheit verstanden werden, die dazu vorgesehen ist, zumindest eine Kenngröße und/oder eine physikalische Eigenschaft aufzunehmen und vorzugsweise zumindest teilweise zu verarbeiten, wobei die Aufnahme aktiv, wie insbesondere durch das Erzeugen und Aussenden eines elektrischen Messsignals, und/oder passiv, wie insbesondere durch die Aufnahme eines Signals, stattfinden kann. Unter einem "Erfassungselement" soll in diesem Zusammenhang insbesondere ein Element verstanden werden, das zumindest ein Signal aussendet und/oder durch eine besondere Beschaffenheit durch eine Erfassungseinheit und/oder einen Sensor detektiert werden kann, um eine genaue Position des Erfassungselements und/oder von zumindest einem Teilabschnitt des Erfassungselements zu erfassen. Dadurch kann vorteilhaft auch bei freien zu bearbeitenden Flächen eine zu bearbeitende Fläche sinnvoll und genau detektiert werden.

Des Weiteren wird vorgeschlagen, dass das autonome Arbeitsgerät eine Ortungseinheit aufweist, welche zu einer Positionsbestimmung vorgesehen ist. Unter einer "Ortungseinheit" soll in diesem Zusammenhang insbesondere eine Einheit verstanden werden, welche dazu vorgesehen ist, über externe Einflussgrößen und/oder Informationen eine eigene relative Position in einem Bezugssystem und/oder gegenüber einem Bezugspunkt zu bestimmen. Es sind verschiedene, dem Fachmann als sinnvoll erscheinende Ortungseinheiten denkbar, insbesondere soll darunter jedoch eine Ortungseinheit entsprechend der deutschen Offenlegungsschrift DE 10 2008 011 947 A1 verstanden werden. Demnach bildet die Beschreibung der Ortungseinheit der Offenlegungsschrift DE 10 2008 011 947 A1, die eine Ortungssensorik und ein Steuermittel umfasst, einen Teil der vorliegenden Offenbarung. Dadurch kann besonders genau und effizient eine abzufahrende Fläche abgefahren werden. Ferner können aus Fahrfehlern resultierende Ungenauigkeiten ausgeglichen werden.

Ferner wird vorgeschlagen, dass die Recheneinheit dazu vorgesehen ist, eine Umrisskarte der zu bearbeitenden Fläche zu erstellen und über die Ortungseinheit eine eigene Position innerhalb der Umrisskarte zu bestimmen. Unter einer "Umrisskarte" soll in diesem Zusammenhang insbesondere eine virtuelle, in dem Speicher der Recheneinheit hinterlegte, Erfassungslinie verstanden werden, welche eine Umrandung der zu bearbeitenden Fläche wiedergibt. Dadurch kann vorteilhaft eine genaue Positionsbestimmung des autonomen Arbeitsgeräts innerhalb der zu bearbeitenden Fläche realisiert werden.

Es wird weiter vorgeschlagen, dass die Recheneinheit dazu vorgesehen ist, eine Ungenauigkeit der Ortungseinheit über eine Veränderung der Teilflächen und eine daraus resultierende Überschneidung der Teilflächen zu berücksichtigen. Insbesondere ist die Recheneinheit dazu vorgesehen, eine Ungenauigkeit der Ortungseinheit über eine Vergrößerung der Teilflächen im Vergleich zu einer unveränderten Teilfläche und eine daraus resultierende Überschneidung der Teilflächen zu berücksichtigen. Dadurch kann auf einfache Weise eine Ungenauigkeit des Ortungssystems ausgeglichen werden und es kann eine vollständige Abdeckung gewährleistet werden. Ferner können Kosten des Ortungssystems durch eine geringe geforderte Genauigkeit eingespart werden.

Des Weiteren wird ein Verfahren mit einem autonomen Arbeitsgerät, insbesondere mit einem erfindungsgemäßen autonomen Arbeitsgerät vorgeschlagen, das dazu vorgesehen ist, eine zu bearbeitende Fläche abzufahren, wobei in einem Schritt eine Außenkante der zu bearbeitenden Fläche, welche durch ein Erfassungselement gekennzeichnet ist, von dem autonomen Arbeitsgerät abgefahren wird und durch eine Recheneinheit des autonomen Arbeitsgeräts zu einer Umrisskarte zusammengefügt wird. Vorzugsweise bildet dieser Schritt einen initialen Schritt, wobei in diesem Zusammenhang unter einem "initialen Schritt" insbesondere ein Schritt verstanden werden soll, welcher zumindest zu Beginn eines gesamten Betriebs und/oder nach einem Reset-Vorgang durchgeführt wird.

Dadurch kann vorteilhaft eine Größe und/oder Form der zu bearbeitenden Fläche ermittelt und gespeichert werden. Ferner kann dadurch besonders exakt die Außenkante abgefahren werden. Des Weiteren ist dadurch keine manuell eingegebene Karte notwendig.

Es wird ferner vorgeschlagen, dass das autonome Arbeitsgerät in einem Schritt eines regulären Betriebs von einem Startpunkt aus einem Erfassungselement über eine variable Distanz hinweg folgt und sich anschließend um einen variablen Winkel in Richtung der zu bearbeitenden Fläche dreht. Unter einem "regulären Betrieb" soll in diesem Zusammenhang insbesondere eine aktive Phase des autonomen Arbeitsgeräts verstanden werden, in der die eigentliche, von dem autonomen Arbeitsgerät zu erfüllende Aufgabe durchgeführt wird. Dadurch kann vorteilhaft einfach ein variables Abfahren der zu bearbeitenden Fläche realisiert werden. Ferner kann dadurch besonders vorteilhaft die zu bearbeitende Fläche in zwei dynamische Teilflächen aufgeteilt werden.

Vorteilhaft wird vorgeschlagen, dass in einem Schritt eines regulären Betriebs, in dem das autonome Arbeitsgerät geradeaus fährt, eine Recheneinheit eine Genauigkeit der Geradeausfahrt überprüft. Dadurch kann eine effektive und genaue Abdeckung der zu bearbeitenden Fläche erreicht werden.

Ferner wird vorgeschlagen, dass das autonome Arbeitsgerät bei einer Detektierung eines inneren Erfassungselements durch eine Erfassungseinheit des autonomen Arbeitsgeräts, das innere Erfassungselement einmal umfährt und eine Recheneinheit des autonomen Arbeitsgeräts eine von dem inneren Erfassungselement begrenzte innere Ausnehmung in einer gespeicherten Umrisskarte vermerkt. Dadurch können durch innere Erfassungselemente begrenzte innere Ausnehmungen besonders einfach für nachfolgende Arbeitsvorgänge gespeichert werden. Ferner kann auf einfache Weise eine Größe der inneren Ausnehmung erfasst werden.

Des Weiteren wird vorgeschlagen, dass das autonome Arbeitsgerät bei einer Detektierung eines irregulären Hindernisses eine Wende durchführt und eine Recheneinheit des autonomen Arbeitsgeräts den Bereich, in dem sich das irreguläre Hindernis befindet, in einer gespeicherten Umrisskarte als abgefahren vermerkt. Dabei wird vorteilhaft eine Größe des irregulären Hindernisses abhängig von der vorliegenden Umrisskarte geschätzt. Unter einem "irregulären Hindernis" soll in diesem Zusammenhang insbesondere ein Hindernis verstanden werden, das nicht von einem Erfassungselement begrenzt wird und/oder nicht von dem autonomen Arbeitsgerät vorhersehbar ist und/oder beweglich und/oder temporär auf der zu bearbeitenden Fläche angeordnet ist. Ferner soll unter einer "Wende" in diesem Zusammenhang insbesondere ein Bewegungsvorgang verstanden werden, bei dem sich eine Ausrichtung des autonomen Arbeitsgeräts um mindestens 90° und vorzugsweise um mindestens 120 ° verändert. Besonders bevorzugt soll darunter jedoch insbesondere eine Wende um 180° verstanden werden. Dadurch können irreguläre Hindernisse besonders einfach ausgespart werden ohne das irreguläre Hindernis unnötig oft anzufahren.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Arbeitsgerät in einer schematischen Darstellung,
- Fig. 2: das erfindungsgemäße autonome Arbeitsgerät in einer Station an einer zu bearbeitenden Fläche während eines initialen Betriebs in einer schematischen Darstellung,
- Fig. 3: das erfindungsgemäße autonome Arbeitsgerät auf der zu bearbeitenden Fläche während eines regulären Betriebs in einer schematischen Darstellung,
- Fig. 4: das erfindungsgemäße autonome Arbeitsgerät auf der zu bearbeitenden Fläche während des regulären Betriebs in einer alternativen Position in einer schematischen Darstellung und
- Fig. 5: das erfindungsgemäße autonome Arbeitsgerät auf der zu bearbeitenden Fläche während des regulären Betriebs mit einer markierten bisher abgefahrenen Fläche in einer schematischen Darstellung.

### Beschreibung des Ausführungsbeispiels

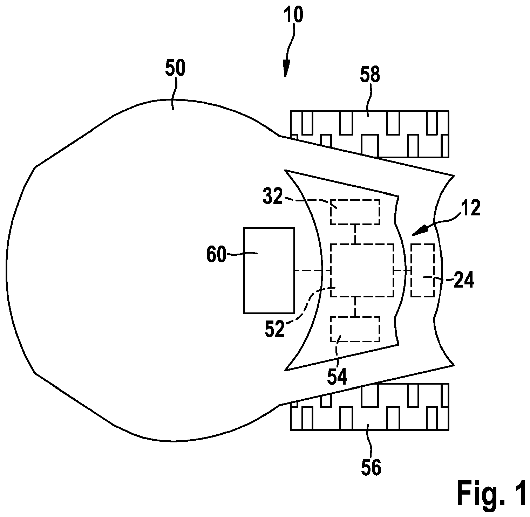

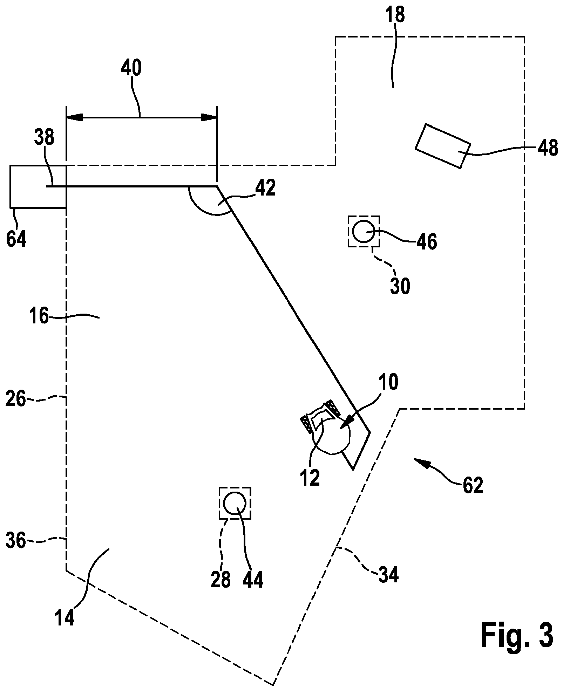

Die Figur 1 zeigt ein erfindungsgemäßes autonomes Arbeitsgerät 10 mit einer Recheneinheit 12, das dazu vorgesehen ist, eine zu bearbeitende Fläche 14 abzufahren. Das autonome Arbeitsgerät 10 ist von einem autonomen Rasenmäher gebildet. Die Recheneinheit 12 ist in einem Gehäuse 50 des autonomen Arbeitsgeräts 10 angeordnet. Die Recheneinheit 12 ist dazu vorgesehen, die zu bearbeitende Fläche 14 in zumindest zwei abzufahrende dynamische Teilflächen 16, 18 aufzuteilen, welche separat abzufahren sind (Fig. 3). Die Recheneinheit 12 umfasst einen Rechenkern 52 und eine Speichereinheit 54. Der Rechenkern 52 und die Speichereinheit 54 sind über eine Leitung verbunden. Das autonome Arbeitsgerät 10 weist zwei vordere Antriebsräder 56, 58 auf, welche über eine nicht weiter sichtbare Antriebseinheit angetrieben werden. Ferner weist das autonome Arbeitsgerät 10 ein nicht weiter sichtbares hinteres Rad auf. Das autonome Arbeitsgerät 10 weist zudem eine Eingabeeinheit 60 auf. Die Eingabeeinheit 60 ist auf dem Gehäuse 50 des autonomen Arbeitsgeräts 10 angeordnet. Die Eingabeeinheit 60 ist über eine Leitung mit dem Rechenkern 52 der Recheneinheit 12 verbunden.

Des Weiteren weist das autonome Arbeitsgerät 10 eine Erfassungseinheit 24 auf, die dazu vorgesehen ist, ein die bearbeitende Fläche 14 begrenzendes Erfassungselement 26, 28, 30 zu detektieren. Die Erfassungseinheit 24 detektiert dabei eine Position eines direkt in der Nähe liegenden Bereichs des Erfassungselements 26, 28, 30. Die Erfassungseinheit 24 ist in einem den vorderen Antriebsrädern 56, 58 zugewandten Bereich des Gehäuses 50 angeordnet und weist auf einer der Eingabeeinheit 60 abgewandten Seite des Gehäuses 50 einen nicht weiter sichtbaren angeordneten Sensor auf. Der Sensor ist während eines regulären Betriebs auf einen Untergrund, auf welchem das autonome Arbeitsgerät 10 steht oder sich fortbewegt gerichtet. Die Erfassungseinheit 24 ist über eine Leitung mit dem Rechenkern 52 der Recheneinheit 12 verbunden. Die zu bearbeitende Fläche 14 bildet einen Teil einer Rasenfläche 62. An einer Außenkante 36 der zu bearbeitenden Fläche 14 sowie um innere Ausnehmungen 44, 46 ist das Erfassungselement 26, 28, 30 angeordnet. Das Erfassungselement 26, 28, 30 ist von einem stromdurchflossenen Erfassungsdraht gebildet. Das Erfassungselement 26, 28, 30 ist auf der Rasenfläche 62 angeordnet.

Das autonome Arbeitsgerät 10 weist eine Ortungseinheit 32 auf, welche zu einer Positionsbestimmung vorgesehen ist. Die Ortungseinheit 32 ist von einer Ortungseinheit entsprechend der deutschen Offenlegungsschrift DE 10 2008 011 947 A1 gebildet, die eine Ortungssensorik und ein Steuermittel umfasst. Die Ortungseinheit 32 ist in einem den vorderen Antriebsrädern 56, 58 zugewandten Bereich des Gehäuses 50 angeordnet. Die Ortungseinheit 32 ist über eine Leitung mit dem Rechenkern 52 der Recheneinheit 12 verbunden.

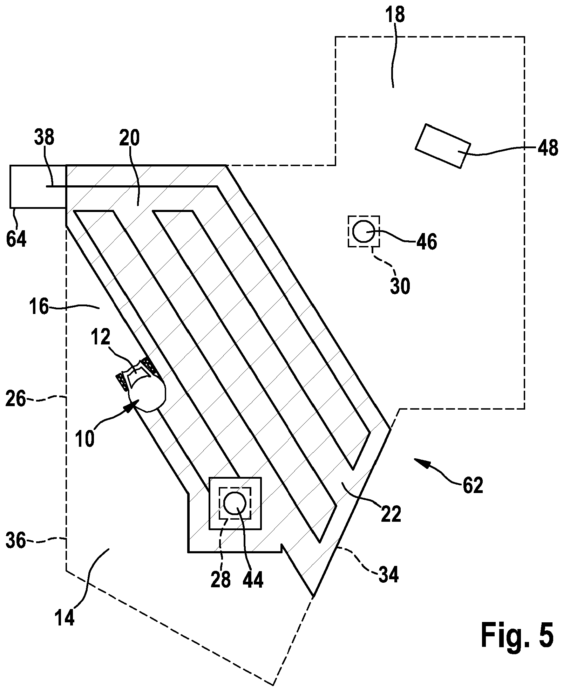

Die Recheneinheit 12 ist dazu vorgesehen, bei einem fehlgeschlagenen Manöver, die bisher abgefahrene Fläche 20 als abgefahrene Teilfläche 22 zu vermerken und eine neue abzufahrende Teilfläche zu bestimmen (Fig. 5). Wenn dem autonomen Arbeitsgerät 10 eine Wende nicht gelingt, demnach das autonome Arbeitsgerät 10 nach einer Wende bezüglich seiner Position und/oder seiner Ausrichtung nicht richtig steht, beziehungsweise nicht mehr auf der zu bearbeitenden Fläche steht, wird die bisher abgefahrene Fläche 20 von der Recheneinheit 12 als abgefahrene Teilfläche 22 markiert und eine neue Teilfläche wird begonnen abzufahren.

Die Recheneinheit 12 ist dazu vorgesehen, den zwei dynamischen Teilflächen 16, 18 teilweise abhängig vom spezifischen Merkmal ihrer Form jeweils zumindest eine Abfahrstrategie zuzuweisen. Die Recheneinheit 12 ist dazu vorgesehen, den Teilflächen 16, 18 abhängig von ihren Größen und ihren Verhältnissen aus Länge und Breite jeweils eine Abfahrstrategie zuzuweisen.

Ferner ist die Recheneinheit 12 dazu vorgesehen, eine Umrisskarte 34 der zu bearbeitenden Fläche 14 zu erstellen und über die Ortungseinheit 32 eine eigene Position innerhalb der Umrisskarte 34 zu bestimmen. Die Umrisskarte 34 wird in der Speichereinheit 54 der Recheneinheit 12 gespeichert.

Des Weiteren ist die Recheneinheit 12 dazu vorgesehen, eine Ungenauigkeit der Ortungseinheit 32 über eine Veränderung der Teilflächen 16, 18 und eine daraus resultierende Überschneidung der Teilflächen 16, 18 zu berücksichtigen. Die Teilflächen 16, 18 werden jeweils im Vergleich zu einer unveränderten ursprünglichen Teilfläche vergrößert. Die einzelnen Teilflächen 16, 18 werden von der Recheneinheit 12 jeweils um einen Ungenauigkeitsfaktor der Ortungseinheit 32 vergrößert. Die Ungenauigkeit der Ortungseinheit beträgt einen Meter, demnach werden die Teilflächen jeweils um einen Meter nach außen hin vergrößert. Durch die Vergrößerung der Teilflächen 16, 18 entsteht eine theoretische Überschneidung der Teilflächen 16, 18, welche eine ungenaue Positionsbestimmung und dadurch eine ungenaue Ortsbestimmung der Teilflächen 16, 18 durch die Ortungseinheit 32 ausgleicht.

Zur Inbetriebnahme des autonomen Arbeitsgeräts 10 wird das Erfassungselement 26, 28, 30 von einem Bediener auf der Rasenfläche 62 verlegt und damit die zu bearbeitende Fläche 14 markiert. Anschließend wird eine Station 64 an einem Rand der zu bearbeitenden Fläche 14 positioniert. Die Station 64 dient als Startpunkt 38, sowie als Ladestation für das autonome Arbeitsgerät 10. Anschließend kann der Bediener das autonome Arbeitsgerät 10 in der Station 64 positionieren und in Betrieb nehmen.

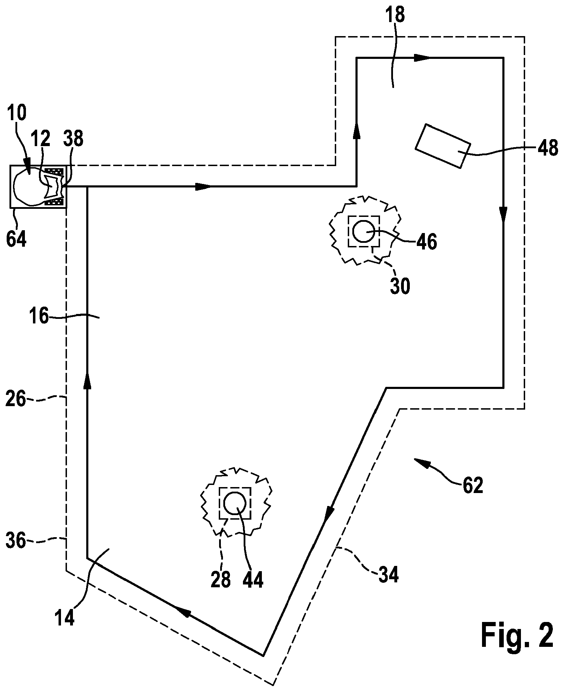

Bevor ein regulärer Betrieb startet wird ein initialer Schritt eingeleitet. In dem initialen Schritt wird eine Außenkante 36 der zu bearbeitenden Fläche 14, welche durch das Erfassungselement 26 gekennzeichnet ist, von dem autonomen Arbeitsgerät 10 abgefahren und durch die Recheneinheit 12 des autonomen Arbeitsgeräts 10 zu der Umrisskarte 34 zusammengefügt (Fig. 2). Die Form sowie eine exakte Position der Umrisskarte 34 in Bezug auf ein Bezugssystem der Ortungseinheit 32 werden in der Speichereinheit 54 der Recheneinheit 12 gespeichert. Zum Folgen der Außenkante 36 detektiert die Erfassungseinheit 24 des autonomen Arbeitsgeräts 10 einen Verlauf des Erfassungselements 26. Nach Abschluss des initialen Schritts kehrt das autonome Arbeitsgerät 10 selbsttätig in seine Station 64 zurück. Anschließend startet der reguläre Betrieb.

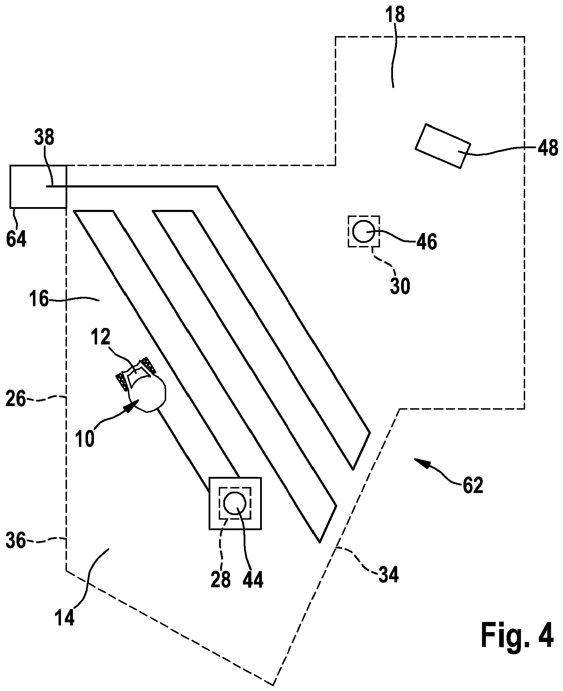

In einem ersten Schritt des regulären Betriebs folgt das autonome Arbeitsgerät 10 von dem Startpunkt 38 aus dem Erfassungselement 26 über eine variable Distanz 40 hinweg und dreht sich anschließend um einen variablen Winkel 42 in Richtung der zu bearbeitenden Fläche 14. Die variable Distanz 40 sowie der variable Winkel 42 werden über die Recheneinheit 12 zufällig generiert, wobei die variable Distanz 40 zwischen null und einer Länge des äußeren Erfassungselements 26 liegt. Der variable Winkel 42 wird mit einem Wert zwischen 0° und 180° generiert. Durch den ersten Schritt des regulären Betriebs wird die zu bearbeitende Fläche 14 autonom in die zwei abzufahrenden dynamischen Teilflächen 16, 18 aufgeteilt, welche separat abzufahren sind (Fig. 3). Die Recheneinheit 12 weist den Teilflächen 16, 18 abhängig von spezifischen Merkmalen ihrer Form jeweils eine Abfahrstrategie zu. Anschließend können in einem weiteren Schritt die Teilflächen 16, 18 separat in ihrer zugewiesenen Abfahrstrategie abgefahren werden. Während des Abfahrens der Teilflächen 16, 18 wird, während das autonome Arbeitsgerät 10 geradeaus fährt, von der Recheneinheit 12 über die Ortungseinheit 32 eine Genauigkeit der Geradeausfahrt überprüft. Die Ortungseinheit 32 wird dabei kurzfristig genau (Fig. 4).

Ist eine Teilfläche 16, 18 vollständig abgefahren oder schlägt ein Manöver fehl, werden über die Recheneinheit 12 alle bis zu diesem Zeitpunkt ungemähten Teilflächen 16, 18 identifiziert. Die räumlich nächstliegende Teilfläche wird anschließend entsprechend ihrer von der Recheneinheit 12 zugewiesenen Abfahrstrategie abgefahren.

Wird während des Abfahrens der Teilflächen 16, 18 eines der inneren Erfassungselemente 28, 30 durch die Erfassungseinheit 24 des autonomen Arbeitsgeräts 10 detektiert, umfährt das autonome Arbeitsgerät 10 das innere Erfassungselement 28, 30 einmal und die Recheneinheit 12 des autonomen Arbeitsgeräts 10 vermerkt eine von dem inneren Erfassungselement 28, 30 begrenzte innere Ausnehmung 44, 46 in der gespeicherten Umrisskarte 34 (Fig. 4). Die inneren Ausnehmungen 44, 46 werden dauerhaft in der Umrisskarte 34 gespeichert. Fährt das autonome Arbeitsgerät 10 während des Umfahrens über einen Ausgangspunkt hinaus weiter an dem inneren Erfassungselement 28, 30 entlang, wird eine Wende durchgeführt und das autonome Arbeitsgerät 10 kehrt zum Ausgangspunkt zurück und eine Bearbeitung wird fortgesetzt. Die Unterscheidung zwischen einem der inneren Erfassungselemente 28, 30 und dem äußeren Erfassungselement 26 erfolgt über die Recheneinheit 12 und die Ortungseinheit 32. Durch die gespeicherte Umrisskarte 34 und die Ortungseinheit 32 wird eine Position innerhalb der Umrisskarte 34 erfasst. Wird eines der Erfassungselemente 26, 28, 30 detektiert und das autonome Arbeitsgerät 10 befindet sich nicht an einem Rand der Umrisskarte 34, handelt es sich um eines der inneren Erfassungselemente 28, 30.

Wird während des Abfahrens ein irreguläres Hindernis 48 detektiert, führt das autonome Arbeitsgerät 10 eine Wende durch und die Recheneinheit 12 des autonomen Arbeitsgeräts 10 vermerkt den Bereich in dem sich das irreguläre Hindernis 48 befindet in der Umrisskarte 34 als abgefahren. Das irreguläre Hindernis 48 wird temporär abgespeichert. Eine Größe des Hindernisses 48 wird anhand der Umrisskarte 34 geschätzt. Befindet sich das Hindernis 48 nah an der Begrenzung der Umrisskarte 34, wird die Größe des Hindernisses 48 bis zu der Begrenzung hin geschätzt. Befindet sich das Hindernis 48 mitten in der Umrisskarte 34 wird eine Größe entsprechend einem Normwert geschätzt. Ist das Hindernis 48 größer als dieser Normwert, wird das Hindernis 48 nochmal angefahren und als weiteres Hindernis 48 erkannt, wodurch sich eine geschätzte Größe des Hindernisses 48 einem Realwert annähert.

Sind alle Teilflächen 16, 18 abgefahren, fährt das autonome Arbeitsgerät 10 autonom in seine Station 64 zurück. In der Station 64 wird das autonome Arbeitsgerät 10 über eine nicht weiter sichtbare Schnittstelle aufgeladen. Ferner wird in der Station 64 der temporäre Speicher der Speichereinheit 54, in welcher die bereits abgefahrene Fläche gespeichert ist, gelöscht. Nach einem vorgegebenen Zeitintervall und/oder zu einem vorgegebenen Zeitpunkt, startet das autonome Arbeitsgerät 10 erneut mit dem regulären Betrieb. Das Zeitintervall und/oder der vorgegebene Zeitpunkt können über die Eingabeeinheit 60 des autonomen Arbeitsgeräts 10 eingegeben werden. Ferner kann über die Eingabeeinheit 60 eine Häufigkeit des initialen Schritts eingegeben werden, um eine sich verändernde zu bearbeitende Fläche 14 zu berücksichtigen.

## Patentansprüche

1. Verfahren mit einem autonomen Arbeitsgerät (10) das dazu vorgesehen ist, eine zu bearbeitende Fläche (14) abzufahren, wobei die zu bearbeitende Fläche (14) zumindest teilautonom in zumindest zwei abzufahrende dynamische Teilflächen (16, 18) aufgeteilt wird, welche separat abzufahren sind, wobei die zumindest zwei dynamischen Teilflächen (16, 18) zumindest nach einem Zeitintervall und/oder bei jedem neuen Arbeitsvorgang zumindest im Wesentlichen neu generiert und/oder neu erfasst werden, wobei das autonome Arbeitsgerät (10) in einem Schritt eines regulären Betriebs von einem Startpunkt (38) aus einem Erfassungselement (26) über eine variable Distanz (40) hinweg folgt und sich anschließend um einen variablen Winkel (42) in Richtung der zu bearbeitenden Fläche (14) dreht, **dadurch gekennzeichnet, dass** die variable Distanz (40) sowie der variable Winkel (42) über eine Recheneinheit (12) zufällig generiert werden und die variable Distanz (40) zwischen null und einer Länge des Erfassungselements (26) liegt.

2. Verfahren nach Anspruch 1, **dadurch gekennzeichnet, dass** in einem initialen Schritt vor einem regulären Betrieb eine Außenkante (36) der zu bearbeitenden Fläche (14), welche durch ein Erfassungselement (26) gekennzeichnet ist, von dem autonomen Arbeitsgerät (10) abgefahren wird und durch eine Recheneinheit (12) des autonomen Arbeitsgeräts (10) zu einer Umrisskarte (34) zusammengefügt wird.

3. Verfahren nach Anspruch 1 oder 2, **dadurch gekennzeichnet, dass** das autonome Arbeitsgerät (10) bei einer Detektierung eines inneren Erfassungselements (28, 30) durch eine Erfassungseinheit (24) des autonomen Arbeitsgeräts (10), das innere Erfassungselement (28, 30) einmal umfährt und eine Recheneinheit (12) des autonomen Arbeitsgeräts (10) eine von dem inneren Erfassungselement (28, 30) begrenzte innere Ausnehmung (44, 46) in einer gespeicherten Umrisskarte (34) vermerkt.

4. Verfahren nach einem der vorhergehenden Ansprüche, **dadurch gekennzeichnet, dass** das autonome Arbeitsgerät (10) bei einer Detektierung eines irregulären Hindernisses (48) eine Wende durchführt und eine Recheneinheit (12) des autonomen Arbeitsgeräts (10) den Bereich, in dem sich das irreguläre Hindernis (48) befindet, in einer gespeicherten Umrisskarte (34) als abgefahren vermerkt.

5. Verfahren nach einem der vorhergehenden Ansprüche, **dadurch gekennzeichnet, dass** der variable Winkel (42) mit einem Wert zwischen 0° und 180° generiert wird.

6. Verfahren nach einem der vorhergehenden Ansprüche, **dadurch gekennzeichnet, dass** nach vollständigem Abfahren einer Teilfläche (16, 18) oder Fehlschlag eines Manövers, von der Recheneinheit (12) alle bis zu diesem Zeitpunkt ungemähten Teilflächen (16, 18) identifiziert werden und die räumlich nächstliegende Teilfläche anschließend entsprechend ihrer von der Recheneinheit (12) zugewiesenen Abfahrstrategie abgefahren wird.

7. Autonomes Arbeitsgerät, insbesondere autonomer Rasenmäher, zur Durchführung eines Verfahrens zumindest nach Anspruch 1.

8. Autonomes Arbeitsgerät nach Anspruch 7, **dadurch gekennzeichnet, dass** die Recheneinheit (12) bei einem fehlgeschlagenen Manöver dazu vorgesehen ist, die bisher abgefahrene Fläche (20) als abgefahrene Teilfläche (22) zu vermerken und eine neue abzufahrende Teilfläche zu bestimmen.

9. Autonomes Arbeitsgerät nach Anspruch 7 oder 8, **dadurch gekennzeichnet, dass** die Recheneinheit (12) dazu vorgesehen ist, zumindest den zwei dynamischen Teilflächen (16, 18) zumindest teilweise abhängig von zumindest einem spezifischen Merkmal ihrer Form jeweils zumindest eine Abfahrstrategie zuzuweisen.

10. Autonomes Arbeitsgerät nach einem der Ansprüche 7 bis 9, **gekennzeichnet durch** eine Erfassungseinheit (24), welche dazu vorgesehen ist, zumindest ein die zu bearbeitende Fläche (14) zumindest teilweise begrenzendes Erfassungselement (26, 28, 30) zu detektieren.

11. Autonomes Arbeitsgerät nach einem der Ansprüche 7 bis 10, **gekennzeichnet durch** eine Ortungseinheit (32), welche zu einer Positionsbestimmung vorgesehen ist.

12. Autonomes Arbeitsgerät nach Anspruch 11, **dadurch gekennzeichnet, dass** die Recheneinheit (12) dazu vorgesehen ist, eine Umrisskarte (34) der zu bearbeitenden Fläche (14) zu erstellen und über die Ortungseinheit (32) eine eigene Position innerhalb der Umrisskarte (34) zu bestimmen.

13. Autonomes Arbeitsgerät zumindest nach Anspruch 11, **dadurch gekennzeichnet, dass** die Recheneinheit (12) dazu vorgesehen ist, eine Ungenauigkeit der Ortungseinheit (32) über eine Veränderung der Teilflächen (16, 18) und eine daraus resultierende Überschneidung der Teilflächen (16, 18) zu berücksichtigen.

## Claims

1. Method having an autonomous working device (10), which is intended to travel along a surface (14) to be processed, wherein the surface (14) to be processed is divided on an at least partially autonomous basis into at least two dynamic partial surfaces (16, 18) to be travelled along, which are to be travelled along separately, wherein the at least two dynamic partial surfaces (16, 18) are at least essentially newly generated and/or newly sensed at least after a time interval and/or during every new working process, wherein, in a step of regular operation, the autonomous working device (10) follows a sensing element (26) from a starting point (38) over a variable distance (40) and subsequently rotates through a variable angle (42) in the direction of the surface (14) to be processed, **characterized in that** the variable distance (40) and the variable angle (42) are randomly generated by means of the computing unit (12) and the variable distance (40) is between zero and a length of the sensing element (26).

2. Method according to Claim 1, **characterized in that**, in an initial step before regular operation, an outer edge (36) of the surface (14) to be processed, which is marked by a sensing element (26), is travelled along by the autonomous working device (10) and combined by a computing unit (12) of the autonomous working device (10) to form an outline map (34).

3. Method according to Claim 1 or 2, **characterized in that**, if an inner sensing element (28, 30) is detected by a sensing unit (24) of the autonomous working device (10), the inner sensing element (28, 30) is travelled around once and a computing unit (12) of the autonomous working device (10) records in a stored outline map (34) an inner cutout (44, 46) bounded by the inner sensing element (28, 30).

4. Method according to one of the preceding claims, **characterized in that**, if an irregular obstacle (48) is detected, the autonomous working device (10) carries out a turn and a computing unit (12) of the autonomous working device (10) records in a stored outline map (34) the area in which the irregular obstacle (48) is located as having being travelled along.

5. Method according to one of the preceding claims, **characterized in that** the variable angle (42) is generated with a value between 0° and 180°.

6. Method according to one of the preceding claims, **characterized in that**, after a partial surface (16, 18) has been travelled along completely or a manoeuvre has failed, all of the partial surfaces (16, 18) that have not been mowed up to this time are identified and the spatially closest partial surface is subsequently travelled along in accordance with its travelling-along strategy assigned by the computing unit (12).

7. Autonomous working device, in particular autonomous lawnmower, for carrying out a method at least according to Claim 1.

8. Autonomous working device according to Claim 7, **characterized in that**, when a manoeuvre fails, the computing unit (12) is intended to record the previously travelled-along surface (20) as a travelled-along partial surface (22) and to determine a new partial surface to be travelled along.

9. Autonomous working device according to Claim 7 or 8, **characterized in that** the computing unit (12) is intended to assign in each case at least one travelling-along strategy to at least the two dynamic partial surfaces (16, 18), at least partially dependent on at least one specific feature of their shape.

10. Autonomous working device according to one of Claims 7 to 9, **characterized by** a sensing unit (24), which is intended to detect at least one sensing element (26, 28, 30) at least partially bounding the surface (14) to be processed.

11. Autonomous working device according to one of Claims 7 to 10, **characterized by** a locating unit (32), which is intended for determining positions.

12. Autonomous working device according to Claim 11, **characterized in that** the computing unit (12) is intended to produce an outline map (34) of the surface (14) to be processed and to determine its own position within the outline map (34) by means of the locating unit (32).

13. Autonomous working device at least according to Claim 11, **characterized in that** the computing unit (12) is intended to take into account an inaccuracy of the locating unit (32) by means of a change in the partial surfaces (16, 18) and a resulting overlap of the partial surfaces (16, 18).

## Revendications

1. Procédé comprenant un appareil de travail autonome (10) qui est destiné à parcourir une surface à traiter (14), la surface à traiter (14) étant divisée au moins de manière partiellement autonome en au moins deux surfaces partielles dynamiques à parcourir (16, 18) qui sont à parcourir séparément, les au moins deux surfaces partielles dynamiques (16, 18) étant au moins substantiellement à nouveau générées et/ou saisies au moins après un intervalle de temps et/ou à chaque nouvelle opération de travail, dans lequel l'appareil de travail autonome (10), au cours d'une étape d'un fonctionnement ordinaire, suit un élément de saisie (26) à partir d'un point de départ (38) sur une distance variable (40) et tourne ensuite d'un angle variable (42) en direction de la surface à traiter (14), **caractérisé en ce que** la distance variable (40) ainsi que l'angle variable (42) sont générés de manière aléatoire par une unité de calcul (12), et la distance variable (40) est comprise entre zéro et une longueur de l'élément de saisie (26).

2. Procédé selon la revendication 1, **caractérisé en ce que** lors d'une étape initiale avant un fonctionnement ordinaire, un bord extérieur (36) de la surface à traiter (14), qui est identifié par un élément de saisie (26), est parcouru par l'appareil de travail autonome (10), et est assemblé en une carte de contour (34) par l'unité de calcul (12) de l'appareil de travail autonome (10).

3. Procédé selon la revendication 1 ou 2, **caractérisé en ce que** l'appareil de travail autonome (10), lors d'une saisie d'un élément de saisie interne (28, 30) par une unité de saisie (24) de l'appareil de travail autonome (10), contourne une fois l'élément de saisie interne (28, 30), et une unité de calcul (12) de l'appareil de travail autonome (10) marque sur une carte de contour (34) enregistrée un évidement intérieur (44, 46) délimité par l'élément de saisie interne (28, 30).

4. Procédé selon l'une quelconque des revendications précédentes, **caractérisé en ce que** l'appareil de travail autonome (10) effectue un demi-tour lorsqu'un obstacle irrégulier (48) est détecté, et une unité de calcul (12) de l'appareil de travail autonome (10) marque sur une carte de contour (34) enregistrée la zone dans laquelle se trouve l'obstacle irrégulier (48) comme ayant été parcourue.

5. Procédé selon l'une quelconque des revendications précédentes, **caractérisé en ce que** l'angle variable (42) est généré avec une valeur comprise entre 0° et 180°.

6. Procédé selon l'une quelconque des revendications précédentes, **caractérisé en ce qu'**après qu'une surface partielle (16, 18) a été parcourue entièrement ou après l'échec d'une manœuvre, l'unité de calcul (12) identifie toutes les zones partielles (16, 18) non tondues jusqu'à cet instant, et la surface partielle la plus proche dans l'espace est ensuite parcourue selon sa stratégie de parcours attribuée par l'unité de calcul (12).

7. Appareil de travail autonome, en particulier tondeuse à gazon autonome, destiné à exécuter un procédé au moins selon la revendication 1.

8. Appareil de travail autonome selon la revendication 7, **caractérisé en ce qu'**en cas de manoeuvre échouée, l'unité de calcul (12) est prévue pour marquer la surface (20) déjà parcourue comme une surface partielle parcourue (22) et pour déterminer une nouvelle surface partielle à parcourir.

9. Appareil de travail autonome selon la revendication 7 ou 8, **caractérisé en ce que** l'unité de calcul (12) est prévue pour attribuer respectivement au moins une stratégie de parcours au moins aux deux surfaces partielles dynamiques (16, 18) au moins en partie en fonction d'au moins une particularité spécifique de leur forme.

10. Appareil de travail autonome selon l'une quelconque des revendications 7 à 9, **caractérisé par** une unité de saisie (24) qui est prévue pour détecter au moins un élément de saisie (26, 28, 30) délimitant au moins en partie la surface à traiter (14).

11. Appareil de travail autonome selon l'une quelconque des revendications 7 à 10, **caractérisé par** une unité de localisation (32) qui est prévue pour déterminer une position.

12. Appareil de travail autonome selon la revendication 11, **caractérisé en ce que** l'unité de calcul (12) est prévue pour créer une carte de contour (34) de la surface à traiter (14) et pour déterminer sa propre position à l'intérieur de la carte de contour (34) par l'intermédiaire de l'unité de localisation (32).

13. Appareil de travail autonome au moins selon la revendication 11, **caractérisé en ce que** l'unité de calcul (12) est prévue pour tenir compte d'une imprécision de l'unité de localisation (32) par une modification des surfaces partielles (16, 18) et d'une intersection des surfaces partielles (16, 18) qui en résulte.
